# EUROPEAN PATENT APPLICATION

(11) **EP 1 638 239 A1**
(43) Date of publication of application: **22.03.2006**
(21) Application number: 04360085.7
(22) Date of filing: 20.09.2004
(51) Int. Cl.: H04L 1/18, H04L 1/16

(54) **Extended repeat request scheme for mobile communication networks**

(71) Applicant: ALCATEL, 75008 Paris (FR)
(72) Inventor: Klein, Siegfried, Dipl.-Inform (FH), 70469 Stuttgart (DE); Kaminski, Stephen, Dipl.-Ing (BA), 73054 Eislingen (DE)
(74) Representative: Richardt, Markus Albert

(57) **Abstract**

The present invention provides a method of optimizing repeat request cycles between transmitter and receiver of a wireless communication network as well as a base station and a mobile station that are adapted to execute the inventive method. A first data packet that is transmitted from a base station to a mobile station is stored preferably by means of a softbuffer module and becomes subject to a decoding procedure. In case of failure the failed decoding procedure is further analyzed preferably in combination with the status of the softbuffer module. In this way information is generated that is indicative of a reason of failure and that allows to specify a different portion and/or different redundancy version for the transmission of a subsequent data packet. Preferably, the mobile station itself specifies a required type of data or a required type of redundancy version that is needed for a sufficient decoding and/or recovering of transmitted data by means of the mobile station. Hence, a retransmission can be entirely determined by the mobile station by effectively exploiting information that has been obtained from previous data packet transmissions.

## Description

### Field of the invention

The present invention relates to the field of Automatic Repeat Request (ARQ) Schemes for mobile communication networks and in particular without limitation to Hybrid ARQ (HARQ) Schemes.

### Background and prior art

By making use of an Automatic Repeat Request (ARQ) Scheme a receiver of a mobile communication network may detect and specify whether a Protocol Data Unit (PDU) has been subject to falsification, truncation or any other severe modification during transmission from a transmitter. Determining whether a PDU has been correctly transmitted allows to transmit an acknowledgement from the receiver to the transmitter that is indicative of the status of a received PDU. Typically, such acknowledgements are submitted as ACK or NACK messages, specifying successful or unsuccessful receipt of the PDU, respectively. Such a procedure, denoted as Automatic Repeat Request (ARQ) Scheme is typically implemented on the Media Access Layer (MAC) of a communication network.

Due to a large variety and frequently changing environmental conditions, transmission errors occur quite frequently in wireless radio frequency based communication networks. In order to minimize transmission errors, numerous error compensating procedures can be implemented, typically in the physical layer of the communication network. For instance, encoding mechanisms implemented on the transmitter side may add redundancy to the Protocol Data Units, which allows to compensate for transmission errors on the receiver side when applying a corresponding decoding scheme.

The Hybrid ARQ makes use of a conventional ARQ in combination with an extensive error compensating code. Typically, an amount of data that has to be transmitted is encoded and a portion thereof is transmitted to the receiver. Typically, the transmitted portion of the encoded data is suitable to decode the entire data, provided that transmission errors remain below a distinct threshold. In such cases, where a data packet, i.e. a portion of the encoded amount of data, cannot be correctly decoded by means of the receiver, an ARQ message can be transmitted to the transmitter inducing a retransmission of the same data packet or inducing transmission of a data packet with an increased code rate that is sufficient for correctly decoding the transmitted data.

The soft combining scheme additionally provides a performance improvement of the receiver's decoding scheme. Information provided by a transmitted data packet is stored in a buffer in form of so called soft bits indicating a probability that a received bit information is valid. Whenever information is retransmitted, either with the same or with a different coding scheme, sequentially obtained data packets providing the same portion of data, can be effectively combined. Correspondingly, the probability values given by the soft bits can be combined, thereby inherently providing an increase of the performance of the demodulation scheme.

The implementation of HARQ in High-Speed Downlink Packet Access (HSDPA) for Wideband Code-Division Multiple Access (WCDMA) - based networks allows to increase data throughput as well as Adaptive Modulation and Coding (AMC) for mobile communication networks. For instance, a PDU that has to be transmitted can be encoded into a codeword with a plurality of different redundancy versions. Typically, not the entire codeword but only fractions of this codeword are transmitted to the receiver for not exceeding the channel capacity of the transmission channel. The receiver in turn has a softbuffer storage that is adapted for storing of the entire codeword. As governed by the redundancy version of the transmitted data packet, the data is appropriately stored in the softbuffer memory of the receiver. Depending on a subsequent decoding procedure the receiver may decide whether the content of the softbuffer is sufficient to decode or to reconstruct the entire PDU. Depending on this decision a positive or negative feedback is retransmitted to the transmitter. Typically, positive feedback is provided by an ACK message and negative feedback is transmitted by means of a NACK message.

In response to receive a NACK message, the transmitter or the base station may specify whether to retransmit the same data packet or to retransmit a data packet of the codeword that is encoded by means of a different redundancy version.

The document WO 0154339 discloses a Hybrid ARQ Scheme with soft combining in variable rate packet data transmission specification. Here, a data packet is transmitted on a variable rate channel from a transmitter to a receiver. This operation includes transmitting a first transmission block portion and a second transmission block portion in a first transmission block at a first data transmission rate. Upon receipt, the receiver decodes the first transmission block in a first decoding. If the first decoding is not successful, the transmitter transmits, in a second transmission, the first transmission block portion at a second transmission rate different from the first transmission rate. The first transmission block and the second transmission block are then soft combined and decoded. If this decoding is not successful, the second transmission block portion is transmitted at a second transmission rate different from the first transmission rate. All transmission blocks are then soft combined and decoded. These operations may be extended to additional transmissions at different transmission rates, soft combining of all received transmission blocks, and decoding.

However, by making use of soft combining and/or code combining allows to increase data throughput as well as decoding efficiency, the subsequently transmitted data packets of various redundancy versions are exclusively generated by means of the transmitter. The retransmission request transmitted from the receiver to the transmitter is typically only indicative of successful or unsuccessful decoding of a previously received data packet. Information obtained during a failed decoding procedure performed by the receiver is typically discarded. However, this failure information might be useful for the transmitter in order to increase the quality of subsequent data packet transmissions.

The present invention therefore aims to provide an improved as well as an extended repeat request scheme for mobile communication networks.

### Summary of the invention

The present invention provides a method of transmitting data from a transmitter to a receiver. The inventive method comprises the step of transmitting at least a first portion of the data by transmitting at least a first encoded data packet to the receiver. As a second step, the invention provides performing of a decoding procedure on the at least first encoded data packet that is received by the receiver. In a successive step, the invention provides generating a retransmission request if the decoding procedure fails. This retransmission request is at least indicative of a second encoded data packet of the data. In particular, this second encoded data packet is specified by the receiver for successfully decoding the data if received from the transmitter as specified. Hence, the receiver itself specifies which portion of the data or which particular redundancy version is required for a second data packet. Finally, the invention provides transmitting the retransmission request to the transmitter. In response to receive the retransmission request, the transmitter generates the required second encoded data packet and transmits the data packet to the receiver, which in turn is enabled to decode or to recover the entire information content of the initial data upon receipt of the second data package.

Generation of the retransmission request is typically performed by means of the receiver. In contrast to repeat request schemes known in the prior art, here, the retransmission request specifies a second encoded data packet that is required by the receiver in order to successfully decode a PDU. This retransmission re- . quest may indicate a different portion of the data than the first portion of the data. Further, it may indicate a different coding scheme or a different redundancy version of the data. Since the retransmission request is generated by means of the receiver, the receiver specifies in a detailed way which information or which portion of the PDU is further required for a successful decoding in a successive decoding step.

In contrast to solutions known in the prior art, where the decision whether to submit a second data packet with either the same or with a different redundancy version is exclusively performed by means of the transmitter, the invention provides to specify the second data packet by means of the receiver. This allows to dynamically adapt the second required data packet to an actual demand of the receiver, which in turn strongly depends on the received first data packet.

According to a preferred embodiment of the invention, the method further comprises storing of the at least first encoded data packet in a storage module of the receiver and generating the retransmission request by making use of failure information of the decoding procedure and by making use of the at least first stored encoded data packet. The storage module or the receiver is typically implemented as a softbuffer for performing a soft combining of successively received data packets. This softbuffer storage module can be analyzed in order to specify which portion of the PDU has not been correctly transmitted and which portion of the PDU has to be retransmitted in a second transmission step. Additionally, failure information that is implicitly obtained in a failed decoding procedure can be analyzed in order to specify the second encoded data packet that is specified by the receiver in order to successfully decode the entire PDU.

In this way the decision whether to simply retransmit a first encoded data packet to the receiver or to retransmit a successive second data packet featuring a different redundancy version than the first data packet to the receiver is completely implemented into the receiver. Consequently, a retransmission of a data packet can be effectively and dynamically adapted to the requirements of the receiver. In combination with existing soft combining and/or soft coding mechanisms the entire data throughput and decoding performance can be remarkably enhanced.

According to a further preferred embodiment of the invention, the method of transmitting data from the transmitter to the receiver further comprises transmitting the second encoded data packet of the data to the receiver in response to receive the retransmission request from the receiver. Hence, the retransmission request generated by and transmitted from the receiver is analyzed by means of the transmitter, that in turn selects or determines the second data packet of the data. Selection or determination of this second data packet is performed in response to receive the retransmission request from the receiver. Since this retransmission request is already indicative of the second data packet, the transmitter only has to perform required actions for transmitting the required second data packet. In contrast to prior art solutions, the transmitter by no means has to decide whether to retransmit the first encoded data packet or, to transmit a different encoded data packet than the first encoded data packet or to transmit an encoded data packet making use of a different redundancy version.

This second data packet that is selected or generated by means of the transmitter is transmitted to the receiver where it can be combined with the at least first data packet. Combining first and second data packets generally allows for a successful recovering or decoding of the data by means of the receiver. In this way by adapting the second data packet to the requirements of the receiver, a PDU can in general successfully be transmitted to the receiver by two successive transmissions.

According to a further preferred embodiment of the invention, the transmitter is implemented as a base station and the receiver is implemented as a mobile station of a Wideband Code-Division Multiple-Access (WCDMA) communication network. The inventive repeat request scheme can be implemented into a variety of wireless communication networks and is generally not limited to a specific data transmission protocol. The transmission protocol and in particular the retransmission request has to provide information whether a decoding procedure has been executed successful or unsuccessful and further information that allow to specify the second data packet.

According to a further preferred embodiment of the invention, the retransmission request comprises an acknowledgement block and a redundancy block. The acknowledgement block is indicative of a successful or unsuccessful decoding of the at least first encoded data packet and the redundancy block is indicative of a redundancy version of the second encoded data packet. Alternatively or additionally the redundancy block may further specify a portion of the data that has to be subject to a retransmission. The acknowledgement block might be implemented as an ACK/NACK message that allows to indicate whether the decoding procedure performed on the received first data packet has been successful. The redundancy block in turn may specify a code that is indicative of a particular redundancy version. Also, such a code may specify a storage block of a soft buffer or a portion of the initial PDU that has to be retransmitted and that shall become subject to a subsequent soft combining.

According to a further preferred embodiment of the invention, the retransmission request is incorporated into a Hybrid Automatic Repeat Request (HARQ) acknowledgement message. Typically in HSDPA, a HARQ acknowledgement message is implemented as a 10 bit message that in principle provides sufficient capacity for transmitting an acknowledgement identifier and additional data packet specific information, such as e.g. information of a required redundancy version or information of a particular portion of the PDU. In typical implementations of HSDPA, eight different redundancy versions can be generated on the basis of an initial data. Principally, these eight different redundancy versions can be specified by a three bit number that might be incorporated into the HARQ acknowledgement message.

Consequently, the inventive Repeat Request Scheme might be universally implementable and applicable with various existing repeat request schemes. This allows for a universal application of this extended Repeat Request Scheme for a large variety of data transmission protocols and various encoding and decoding schemes. For instance, encoding schemes such like Quadrature Phase Shift Keying (QPSK) and Quadrature Amplitude Modulation, such as 16 QAM might be universally applicable with the present invention.

In another aspect, the invention provides a mobile station of a wireless communication network. This mobile station is adapted to receive encoded data packets of data from a base station and comprises a buffer storage module, decoding means and a retransmission module. The buffer storage module is adapted to store at least a first encoded data packet that is received from the base station. This first encoded data packet may represent a portion of the data, i.e. the PDU, and might be encoded by means of a particular redundancy version of an applied encoding algorithm. Typically, the buffer storage module is implemented as a softbuffer module that allows to combine successively obtained data packets.

The decoding means of the mobile station are adapted to execute a decoding procedure on the at least first encoded data packet. Typically, the decoding procedure is applied to the entire data that is stored in the buffer storage module. In this way soft combining and/or soft decoding can be applied on portions of data that have been received by various successive transmissions of data packets. The retransmission module of the mobile station is adapted to generate a retransmission request if the decoding procedure fails. The retransmission request is at least indicative of a second encoded data packet of the data. Preferably, this second encoded data packet is specified and required by the mobile station for successfully decoding the data. The transmission module provides analysis of data that is stored in the buffer storage module and to analyze the failure of the decoding procedure. Processing of information obtained from the buffer storage module and from the decoding module allows to specify a portion of required data and/or to specify a redundancy version of the data that allows for sufficient decoding.

In still another aspect, the invention provides a base station of a wireless communication network. The base station is adapted to transmit at least a first encoded data packet of data to a mobile station. The base station therefore comprises an encoding module for generating the at least first encoded data packet from at least a portion of the data, a transmission module for transmitting the at least first encoded data packet to the mobile station and a processing module. In particular, the processing module is adapted to process a retransmission request that is received from the mobile station. Typically, this retransmission request is indicative of a second encoded data packet of the data that is needed by the mobile station for successfully decoding the data. Hence, the base station is adapted to process the retransmission request in order to generate the second encoded data packet. Typically, this second encoded data packet represents a portion of the data and/or a varying redundancy version of the data that enables the mobile station to appropriately and successfully decode or recover the data. Consequently, the base station is also capable of transmitting the second data packet to the mobile station that has been generated in response to receive and to process the retransmission request.

### Brief description of the drawings

In the following, preferred embodiments of the invention will be described in greater detail by making reference to the drawings in which:
- Figure 1: shows a schematic block diagram of the wireless communication network,
- Figure 2: shows a detailed block diagram of the mobile station,
- Figure 3: illustrates a flowchart of the inventive repeat request scheme,
- Figure 4: shows a block diagram of a storage buffer and associated probability distributions.

### Detailed description

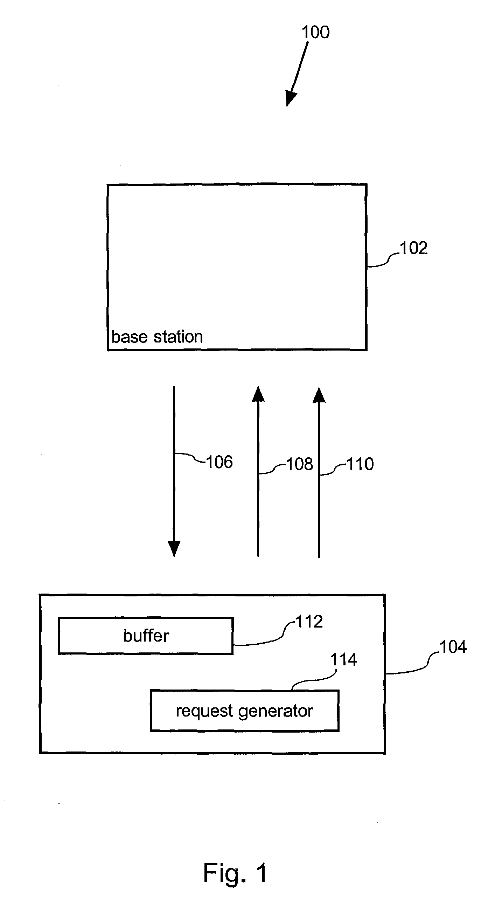

Figure 1 schematically illustrates a block diagram of a wireless communication network 100. The wireless communication network 100 has a transmitter 102 implemented as base station and a receiver 104 that is typically implemented as a mobile station 104. The receiver or mobile station 104 has a storage buffer 112 as well as a request generator 114. Base station 102 and mobile station 104 are adapted to wirelessly transmit data packets via the downlink 106 and via uplink channels 108, 110.

Data that has to be transmitted from the base station 102 to the mobile station 104 is typically encoded in a codeword that is e.g. three times larger in storage size than the original data. Making use of various redundancy versions of the codeword, several bits of the codeword might be removed in order to generate a data packet of appropriate size that can be transmitted to the mobile station 104 by means of the downlink 106. The received data packet is typically stored by means of the buffer 112, that may be implemented as a softbuffer. Such a softbuffer generally provides a storage capacity that corresponds to the length of the codeword generated by the base station 102. The various data fragments of the codeword that might be transmitted by means of the first data packet are then stored at corresponding positions within the softbuffer 112.

Depending on whether the information provided by the data packet and stored in the softbuffer 112 is sufficient to decode the initial PDU, the request generator 114 generates an acknowledgement message that has to be transmitted to the base station 102 in response to receipt of the data packet. The acknowledgement message may comprise an ACK/NACK identifier specifying whether the received data packet can be sufficiently decoded. Typically, such an ACK/NACK message is transmitted to the base station 102 via the request line 108 or request channel 110.

Additional to the ACK/NACK message the request generator 114 may further specify which portion of the codeword has to be transmitted to the mobile station 104 in order to enable the mobile station 104 to sufficiently decode the transmitted data packets. For example, the request generator 114 may generate a retransmission request that precisely specifies which portion of the codeword has to be retransmitted or which one of various existing redundancy versions of the codeword have to be transmitted to the mobile station 104 in a successive data packet transmission. However, this is only of relevance when a decoding of a received data packet fails.

The mobile station 104 is enabled to evaluate and to analyze received data packets in order to retransmit an appropriate retransmission request to the transmitter 102 for inducing a subsequent transmission of a data packet that is needed for a successful recovery or decoding of a PDU that has to be transmitted from the base station 102 to the mobile station 104. Providing the mobile station 104 with the capability to autonomously specify required data packets or required redundancy versions of the codeword effectively allows to enhance data throughput and to minimize transmission of dispensable data packets, i.e. data packets that are repeatedly transmitted to the mobile station 104 irrespective of previously transmitted data packets.

The request line 108 represents the portion of the retransmission request that indicates a portion of the codeword or a particular redundancy version of the codeword that is further required by the mobile station 104. Both illustrated request lines 108, 110 might be incorporated into a single request line or the two different portions of the retransmission request may even be realized by a single retransmission request, such as e.g. a HARQ acknowledgement message.

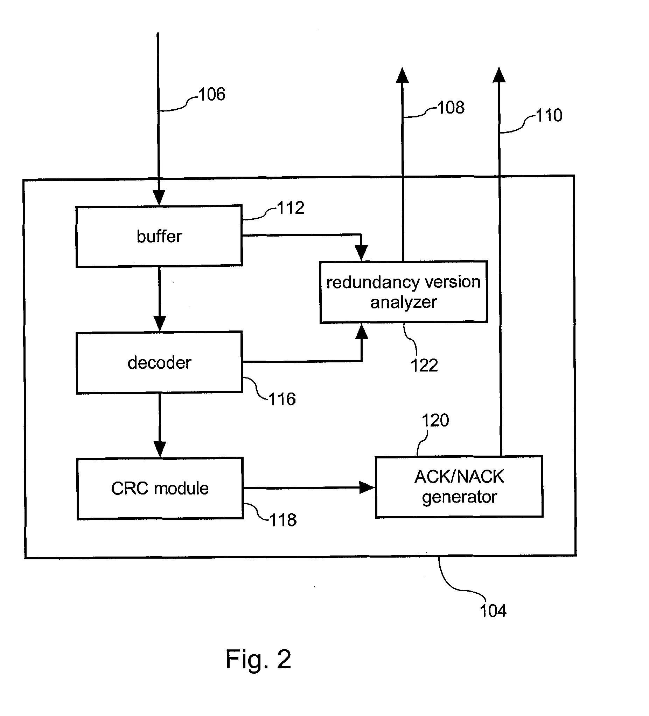

Figure 2 illustrates a detailed block diagram of a mobile station 104. The mobile station 104 has a buffer storage module 112, a decoder 116, a cyclic redundancy check (CRC) module 118, a redundancy version analyzer 122 as well as an ACK/NACK generator 120. The buffer 112 is typically implemented as a softbuffer module that allows for sequentially storing a plurality of sequentially transmitted data packets. Portions of sequentially transmitted data packets that correspond to the same bits of the codeword can be easily combined by means of such a softbuffer module 112, thereby reducing the transmission error rate.

Data packets are transmitted to the mobile station 104 via the downlink 106 that is in turn connected to the buffer storage module 112. Received data packets are then typically stored by means of the softbuffer module 112 before the decoder 116 applies a decoding procedure on the stored data packets. This decoding procedure may be applied on a single data packet, on various data packets separately or in a combined way to several successively obtained data packets, hence to the entire data stored in the softbuffer 112. After decoding, which is performed by means of the decoder 116, the CRC module 118 checks whether the decoding procedure has been successful.

If the decoding has been successfully performed, the CRC module 118 will submit a corresponding electrical signal to the ACK/NACK generator 120 that in response generates an acknowledgement message that is transmitted to the base station via the request line 110. In the other case when the CRC module 118 detects that the decoding procedure performed by decoder 116 failed, the CRC module 118 induces the ACK/NACK generator 120 to generate and to transmit a corresponding NACK message to the base station 102.

Additional to the generation of an NACK message, the redundancy version analyzer 122 is invoked. The redundancy version analyzer 122 serves to analyze the status of the buffer module 112 as well as to process information that is obtained from the failed decoding procedure. In this way, the redundancy version analyzer 122 is enabled to determine a particular data packet that is specified and required by the buffer 112 or by the decoder 116 to sufficiently decode obtained data packets. Hence, from buffer status as well as a failing decoding procedure, the mobile station 104 is given the capability to precisely determine another redundancy version and/or another portion of the codeword for a subsequent transmission of another data packet.

Even though the uplink is represented by two separate request lines 108, 110, the uplink might be realized by a single physical transmission or request line. The retransmission request only has to provide a first and a second portion, one of which specifying that decoding has been insufficient while the remaining portion further specifies the type of further required information. Preferably, the retransmission request specifying a data portion or a redundancy version as well as the acknowledgement message generated by the ACK/NACK generator 120 are incorporated into a single request message.

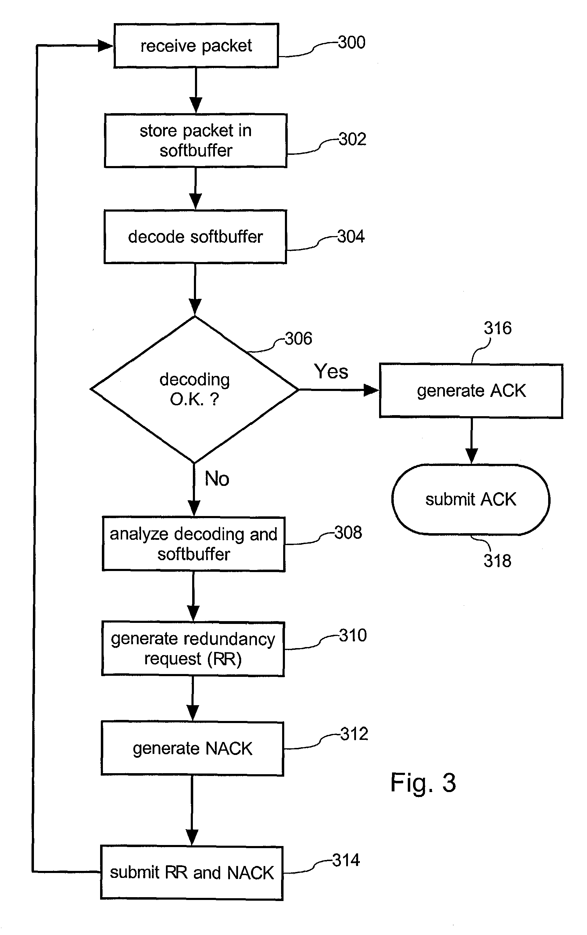

Figure 3 illustrates a flowchart of the inventive extended repeat request scheme. The illustrated flowchart of figure 3 represents the functionality of an inventive mobile station 104. In a first step 300 a data packet is received that has been transmitted from the base station 102. In a subsequent step 302 the received data packet is stored in the softbuffer 112. After storage of the received data packet in the softbuffer, the entire softbuffer is decoded in step 304. Generally, this decoding procedure can be performed in a plurality of different ways. Preferably, when already a plurality of received data packets is stored in the softbuffer, the entirety of stored data packets is combined and becomes subject to the decoding procedure.

In the subsequent step 306, it is checked whether the decoding procedure provides a sufficient decoding of the data that has been stored in the softbuffer. If the softbuffer or the data stored in the softbuffer has been sufficiently decoded by means of the decoder 116, in a following step 316, a positive acknowledgement message is generated and in a final step 318 this positive acknowledgement message is resubmitted to the base station 102. In this way the base station 102 obtains a feedback from the mobile station 104 that the data packet has been correctly decoded and that the data has been correctly transmitted.

In the opposite case, where in step 306 a failure of the decoding procedure has been detected, the method continues with step 308 where the status of the softbuffer as well as the reason of failure of the decoding procedure are analyzed. This analysis allows to specify and to determine the reason for the decoding failure. Having knowledge of the type of decoding failure, in a successive step 310, a redundancy request (RR) can be generated. This redundancy request is indicative of another data packet of the codeword and/or another redundancy version of the codeword that allows for a sufficient decoding of the codeword by means of receiving a second data packet by means of a successive data packet transmission. This successive data packet has to be generated by the base station in accordance with the redundancy request.
After evaluation and analysis of a decoding failure and associate generation of a retransmission request in form of e.g. a redundancy request, in a successive step 312 a NACK message is generated. Thereafter, in step 314 the retransmission request or redundancy request and the NACK message are submitted or retransmitted to the base station 102. Based on the NACK identifier and the data specific retransmission request, the base station 102 generates a second data packet that allows for a successful decoding if correctly transmitted from the base station 102 to the mobile station 104. Upon receipt of this successive data packet, the procedure illustrated in figure 3 returns to the first step 300, where the successively transmitted and received data packet is accumulated with previously received data packets in the softbuffer in step 302.

The method illustrated in the flowchart of figure 3 continues as long as the decoding procedure has been successfully executed. Even though the requested second data packet might be suitable in combination with a first data packet to decode the codeword, the second data transmission can also be subject to a severe transmission error. In this case, even a third data packet might be requested correspondingly with respect to previously obtained data packets. Even though a decoding procedure cannot be successfully applied, any type of data packet that is received by the mobile station 104 can be stored by means of the softbuffer module 112 for further analysis.

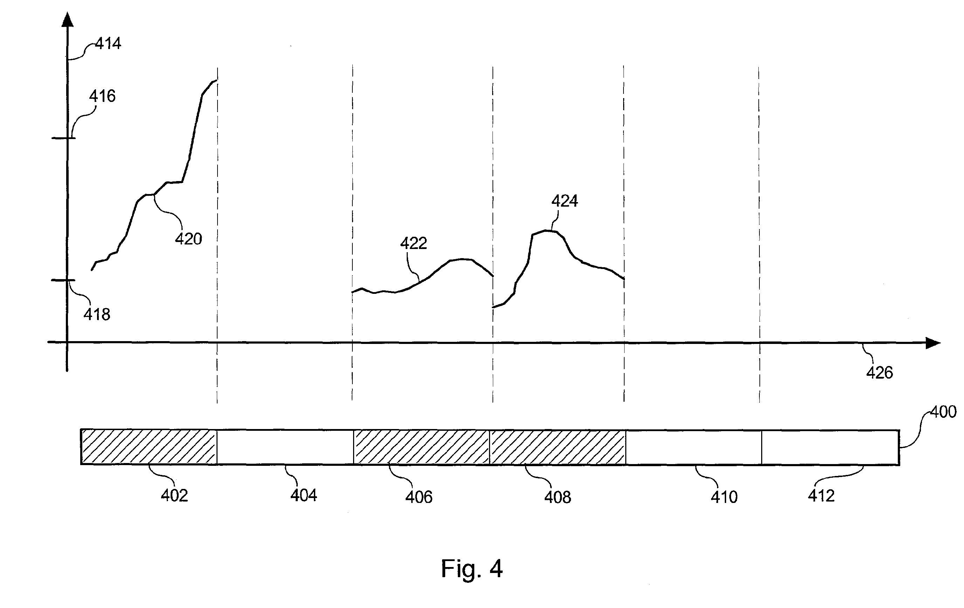

Figure 4 illustrates a diagram of a softbuffer 400 and associated probability distributions 420, 422, 424 that the data stored in various blocks 402, 404, 406, 408, 410, 412 of the softbuffer have been correctly received. Here, a transmission error probability 414 is plotted versus a bit numbering 426 of the softbuffer 400. The transmission error probability features an upper and a lower threshold 416, 418, respectively. Whenever the transmission error probability is above the upper threshold, it can be assumed that a corresponding storage bit of the softbuffer has been subject to a transmission error. In the other case, for probability values below the lower threshold 418, it can be assumed that the corresponding bit has been correctly transmitted. Probability values that are between the upper and the lower threshold 416, 418, might be combined with corresponding probability values of successively received data packets thereby providing an efficient soft combining.

The softbuffer 400 is fragmented into numerous storage blocks 402, ... 412. The redundancy version selected for transmission of a data packet may specify that for example only a portion of the initial codeword that corresponds to storage blocks 402, 406 and 408 is transmitted by means of a first data packet. After transmission of this data packet and subsequent decoding of the softbuffer, the transmission error probability can be separately determined for each one of the storage blocks 402, 406, 408. Given the case that the transmission error probability of each one of the transmitted storage blocks is sufficiently low, the entire information content of the codeword can be sufficiently decoded and recovered by the mobile station 104.

In the illustrated example the transmission error probability curve 420 corresponds to storage block 402, probability curve 422 corresponds to storage block 406 and probability curve 424 corresponds to storage block 408. As can be further seen, probability curve 420 features rather large transmission error probability values that may even exceed the upper threshold 416, whereas probability curves 422, 424 substantially remain in the range specified by the upper and the lower threshold. In this example the transmitted data might not be correctly decoded and a NACK message has to be transmitted to the base station for requesting another data packet transmission. Taking into account the various separate probability curves 420, 422, 424 of storage blocks 402, 406 and 408, it might be sufficient to limit a successive transmission of another data packet to the transmission of storage block 402, because storage blocks 406, 408 already have been successfully transmitted. In this way the retransmission request can be dynamically and individually adapted to the actual requirements of the mobile station 104. Subsequent required transmission of data packets can therefore be limited to those portions of data that have not been correctly transmitted during preceding data packet transmissions.

Alternatively or additionally as a consequence of an analysis of a first data packet transmission, the inventive repeat request scheme may specify to transmit different portions of the initial data that correspond to storage blocks 404, 410, or 412. In this way retransmission is by no means limited to retransmission of already transmitted data portions but a retransmission may also make use of a completely different redundancy version than the initially used redundancy version. However, the invention provides an effective approach for reducing the number of retransmission cycles as well as to optimize the data that is subject to a retransmission due to e.g. unavoidable transmission errors.

### List of Reference Numerals

- 100: communication network
- 102: base station
- 104: mobile station
- 106: downlink
- 108: request line
- 110: request line
- 112: buffer
- 114: request generator
- 116: decoder
- 118: CRC module
- 120: ACK/NACK generator
- 122: redundancy version analyzer
- 400: buffer
- 402: storage block
- 404: storage block
- 406: storage block
- 408: storage block
- 410: storage block
- 412: storage block
- 414: transmission error probability
- 416: upper threshold
- 418: lower threshold
- 420: probability curve
- 422: probability curve
- 424: probability curve
- 426: number of storage bits

## Claims

1. A method of transmitting data from a transmitter (102) to a receiver (104), the method comprising the steps of:
- transmitting at least a first portion of the data by transmitting at least a first encoded data packet to the receiver,
- performing a decoding procedure on the at least first encoded data packet being received by the receiver,
- generating a retransmission request if the decoding procedure fails, the retransmission request being at least indicative of a second encoded data packet of the data, the second encoded data packet being specified by the receiver for successfully decoding the data,
- transmitting the retransmission request to the transmitter.

2. The method according to claim 1, further comprising:
- storing of the at least first encoded data packet in a storage module (112) of the receiver (104),
- generating the retransmission request by making use of failure information of the decoding procedure and by making use of the at least first stored encoded data packet.

3. The method according to claim 1, further comprising transmitting the second encoded data packet of the data to the receiver (104) in response to receive the retransmission request from the receiver, combining the at least first and the second encoded data packet allows for a successful decoding of the data by the receiver.

4. The method according to claim 1, wherein the transmitter is a base station (102) and the receiver is a mobile station (104) of a Wideband Code-Division Multiple-Access (WCDMA) communication network (100).

5. The method according to claim 1, wherein the retransmission request comprises an acknowledgement block and a redundancy block, the acknowledgement block being indicative of a successful or unsuccessful decoding of the at least first encoded data packet and the redundancy block being indicative of a redundancy version of the second encoded data packet.

6. The method according to claim 5, wherein the retransmission request is incorporated into a Hybrid Automatic Repeat Request (HARQ) acknowledgement message.

7. A mobile station (104) of a wireless communication network (100), the mobile station being adapted to receive encoded data packets of data from a base station (102), the mobile station comprising:
- a buffer storage module (112) for storing at least a first encoded data packet being received from the base station,
- decoding means (116) for executing a decoding procedure on the at least first encoded data packet,
- a retransmission module being adapted to generate a retransmission request if the decoding procedure fails, the retransmission request being at least indicative of a second encoded data packet of the data, the second encoded data packet being specified by the mobile station for successfully decoding the data.

8. The mobile station (104) according to claim 7, wherein the retransmission module being further adapted to generate the retransmission request in response to an analysis of failure information of the decoding procedure and in response to an analysis of the buffer storage module (112).

9. A base station (102) of a wireless communication network (100), the base station being adapted to transmit at least a first encoded data packet of data to a mobile station (104), the base station comprising:
- an encoding module for generating the at least first encoded data packet from at least a portion of the data,
- a transmission module for transmitting the at least first encoded data packet to the mobile station,
- a processing module being adapted to process a retransmission request being received from a mobile station, the retransmission request being indicative of a second encoded data packet of the data being specified by the mobile station for successfully decoding the data.

10. The base station according to claim 9, wherein the at least first data packet and the second data packet represent the same or different redundancy versions of the data.
